(19) Europäisches Patentamt
European Patent Office
Office européen des brevets

(11) **EP 3 346 328 B1**

(12) **FASCICULE DE BREVET EUROPEEN**

(45) Date de publication et mention
de la délivrance du brevet:
**28.08.2019  Bulletin 2019/35**

(51) Int Cl.:
***G02F 1/365*** [(2006.01)]

(21) Numéro de dépôt: **18150511.6**

(22) Date de dépôt: **05.01.2018**

(54) **DISPOSITIF OPTOELECTRONIQUE DE GENERATION D'UN PEIGNE DE FREQUENCES COHERENT**

OPTOELEKTRONISCHE VORRICHTUNG ZUR ERZEUGUNG EINES KOHÄRENTEN FREQUENZKAMMS

OPTOELECTRONIC DEVICE FOR GENERATING A COHERENT FREQUENCY COMB

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **09.01.2017  FR 1750164**

(43) Date de publication de la demande:
**11.07.2018  Bulletin 2018/28**

(73) Titulaires:
* **COMMISSARIAT À L'ÉNERGIE ATOMIQUE ET AUX ÉNERGIES ALTERNATIVES**
  **75015 Paris (FR)**
* **Thales**
  **92400 Courbevoie (FR)**

(72) Inventeurs:
* **CASALE, Marco**
  **75005 PARIS (FR)**
* **EL DIRANI, Houssein**
  **38100 GRENOBLE (FR)**
* **SCIANCALEPORE, Corrado**
  **69002 LYON (FR)**

(74) Mandataire: **GIE Innovation Competence Group**
**310, avenue Berthelot**
**69372 Lyon Cedex 08 (FR)**

(56) Documents cités:
* **STEVEN A. MILLER ET AL: "Tunable frequency combs based on dual microring resonators", OPTICS EXPRESS, vol. 23, no. 16, 7 août 2015 (2015-08-07), page 21527, XP055410219, DOI: 10.1364/OE.23.021527**
* **A. KORDTS ET AL: "Higher order mode suppression in high-Q anomalous dispersion SiN microresonators for temporal dissipative Kerr soliton formation", OPTICS LETTERS, vol. 41, no. 3, 1 février 2016 (2016-02-01), page 452, XP055404396, ISSN: 0146-9592, DOI: 10.1364/OL.41.000452**
* **S.-W. HUANG ET AL: "Smooth and flat phase-locked Kerr frequency comb generation by higher order mode suppression", SCIENTIFIC REPORTS, vol. 6, no. 1, 16 mai 2016 (2016-05-16), XP055410327, DOI: 10.1038/srep26255**

**Description**

**DOMAINE TECHNIQUE**

Le domaine de l'invention est celui des dispositifs optoélectroniques de génération d'un peigne de fréquences.

**ÉTAT DE LA TECHNIQUE ANTÉRIEURE**

Des dispositifs optoélectroniques existent qui permettent de générer des peignes de fréquences. Un peigne de fréquences est une représentation d'un signal optique dans le domaine fréquentiel dont le spectre est composé d'une somme discrète de fréquences. L'amplitude peut être pondérée par une enveloppe spectrale centrée sur la fréquence $w_p$ d'un signal de pompe. De tels dispositifs optoélectroniques trouvent leur application notamment dans le domaine de la télécommunication optique, par exemple les réseaux de transmission cohérente de données, de la génération de signaux, de la spectroscopie rapide, voire des systèmes de référence temporelle.

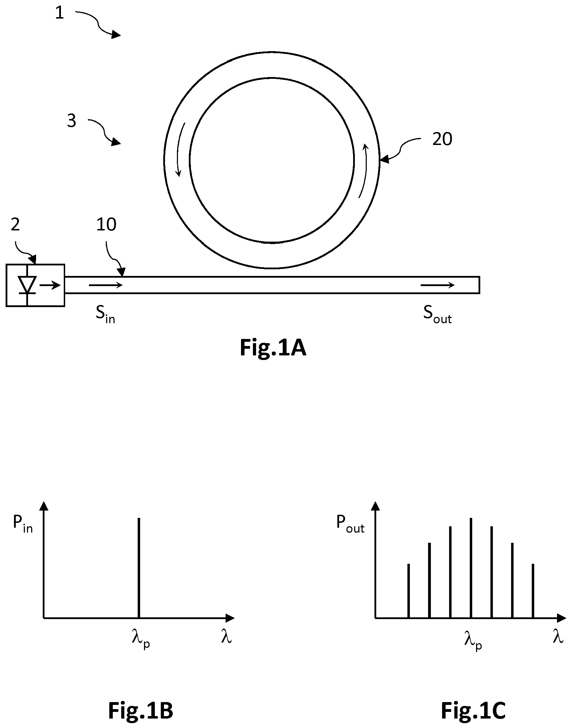

La figure 1A illustre un exemple d'un tel dispositif optoélectronique 1, décrit dans la publication de Levy et al. intitulée CMOS-compatible multiple-wavelength oscillator for on-chip optical interconnects, Nature Photon. 4, 37-40 (2010), ce dispositif optoélectronique 1 étant réalisé par des procédés de la microélectronique de type CMOS. Il comporte une source laser 2 et un micro-résonateur optique 3 en anneau. La source laser 2 est adaptée à émettre un signal optique Sin dit de pompe, continu et monochromatique de longueur d'onde $\lambda_p$. Le micro-résonateur 3 comporte un premier guide d'onde 10 ayant une entrée couplée à la source laser 2 et une sortie qui fournit un signal optique $S_{out}$ dont le spectre forme le peigne de fréquences généré. Il comporte en outre une cavité optique formée d'un deuxième guide d'onde 20, dit anneau résonant, réalisé en un matériau à propriétés optiques non linéaires du troisième ordre, ici du nitrure de silicium.

Le micro-résonateur optique 2 forme un oscillateur paramétrique optique. Le signal de pompe Sin, dont le spectre est représenté sur la figure 1B, se couple de manière résonante par onde évanescente à un mode fondamental de l'anneau résonant 20. Dans la mesure où le matériau de l'anneau résonant 20 est optiquement non linéaire d'ordre trois, c'est-à-dire qu'il possède une susceptibilité électrique d'ordre trois, un phénomène dit de mélange à quatre ondes en cascade apparaît qui génère, à partir du mode fondamental supporté par l'anneau résonant 20, un peigne de fréquences dont un exemple est représenté sur la figure 1C. Par ailleurs, dans la mesure où un tel micro-résonateur optique présente un facteur de qualité Q élevé, il n'est pas nécessaire que la puissance du signal de pompe soit grande pour que le gain paramétrique soit supérieur aux pertes optiques présentes dans l'anneau résonant, ce qui permet d'initier l'amplification des ondes générées.

La publication de Kordts et al. intitulée Higher order mode suppression in high-Q anomalous dispersion SiN microresonators for temporal dissipative Kerr soliton formation, Opt. Lett. 41, 452 (2016), décrit un autre exemple d'un dispositif optoélectronique permettant de générer ici un peigne de fréquences cohérent, dans lequel l'anneau résonant réalisé en SiN présente un régime de dispersion anormale à la longueur d'onde de pompe $\lambda_p$. Du fait de la dispersion anormale et des propriétés non linéaires du troisième ordre du matériau de l'anneau résonant, des solitons temporels dissipatifs dits de Kerr sont formés, qui génèrent un peigne de fréquences par mélange à quatre ondes en cascade. Le dispositif optoélectronique permet notamment de générer un peigne de fréquences dont le bruit d'amplitude et de fréquence est diminué.

Cependant, comme l'explique Kordts 2016, le dimensionnement d'un tel anneau résonant dans le but d'obtenir un régime de dispersion anormale se traduit par le fait de rendre multimode l'anneau résonant. Or, il apparaît que les différents modes supportés par l'anneau résonant peuvent interférer entre eux, ce qui peut dégrader le régime anormal de la dispersion et ainsi perturber la formation des solitons temporels de Kerr. Une solution consiste alors à modifier localement l'anneau résonant pour former une portion localement monomode, adaptée à filtrer les modes d'ordre supérieur.

**EXPOSÉ DE L'INVENTION**

L'invention a pour objectif de remédier au moins en partie aux inconvénients de l'art antérieur, et plus particulièrement de proposer un dispositif optoélectronique de génération d'un peigne de fréquences cohérent qui soit plus performant. Un autre objet de l'invention est de proposer un dispositif optoélectronique de génération d'un peigne de fréquences cohérent dont les pertes optiques sont limitées. Un autre objet est de proposer un dispositif optoélectronique qui limite voire écarte les perturbations optiques susceptibles de dégrader la formation des solitons temporels dissipatifs de Kerr. Pour cela, l'objet de l'invention est un dispositif optoélectronique de génération d'un peigne de fréquences comportant une source laser adaptée à émettre un signal optique dit de pompe, continu et monochromatique d'une longueur d'onde dite de pompe, et un micro-résonateur optique en anneau.

Le micro-résonateur optique comporte :

- un premier guide d'onde, comportant une entrée couplée optiquement à la source laser, et une sortie destinée à fournir le peigne de fréquences généré ;
- un deuxième guide d'onde multimode en anneau, dit anneau résonant, couplé optiquement au premier guide d'onde pour générer un mode optique dit fondamental dans l'anneau résonant, l'anneau résonant étant formé en un matériau, dit de coeur, optiquement non linéaire d'ordre trois dont l'indice de réfraction dépend de l'intensité d'un signal optique le parcourant et qui présente des dimensions transversales telles qu'il présente un régime de dispersion anormale associé audit mode optique fondamental. Autrement dit, les dimensions transversales de l'anneau résonant, par exemple la largeur et/ou l'épaisseur de l'anneau résonant, sont choisis de sorte que le paramètre de dispersion D, à la longueur d'onde du mode fondamental, est positif.

Selon l'invention, le dispositif optoélectronique comporte en outre au moins un troisième guide d'onde, dit guide filtrant, couplé optiquement à l'anneau résonant, présentant un indice effectif associé à un mode optique fondamental supporté par le guide filtrant égal à un indice effectif associé à un mode optique d'ordre supérieur supporté par l'anneau résonant.

Certains aspects préférés mais non limitatifs de ce dispositif optoélectronique sont les suivants.

Le guide filtrant peut comporter une portion de couplage couplée optiquement à l'anneau résonant, et formée d'un matériau dit de coeur, l'indice de réfraction du matériau de coeur et des dimensions transversales étant choisis de sorte qu'un indice effectif associé du mode optique fondamental du guide filtrant soit égal à un indice effectif associé au mode optique d'ordre supérieur de l'anneau résonant.

Le guide filtrant peut présenter une portion de couplage monomode.

Le guide filtrant peut être réalisé en un matériau, dit de coeur, identique à celui de l'anneau résonant.

Le guide filtrant peut comporter une portion de couplage espacée de l'anneau résonant d'une distance comprise entre 200nm et 300nm.

Le guide filtrant peut comporter une portion de couplage et une portion d'extrémité, la portion d'extrémité présentant des dimensions transversales qui diminuent à mesure que l'on s'éloigne de la portion de couplage.

L'anneau résonant peut être formé d'un coeur entouré d'une gaine, le matériau de coeur étant du nitrure de silicium.

L'anneau résonant peut présenter une épaisseur moyenne supérieure ou égale à 700nm, et une largeur moyenne supérieure ou égale à 1200nm.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés, outre les figures 1A-1C déjà décrites, sur lesquels :

la figure 1A est une vue de dessus, schématique et partielle, d'un dispositif optoélectronique de génération d'un peigne de fréquences selon un exemple de l'art antérieur ; les figures 1B et 1C illustrent respectivement un exemple de spectre en longueur d'onde du signal optique de pompe et un exemple de peigne de fréquences généré ;

la figure 2A est une vue de dessus, schématique et partielle, d'un dispositif optoélectronique de génération d'un peigne de fréquences selon un mode de réalisation ; la figure 2B est une vue en coupe transversale de l'anneau résonant et du guide filtrant selon un plan A-A ;

les figures 3A et 3B illustrent respectivement un exemple de spectre en longueur d'onde du signal optique de pompe et un exemple de peigne de fréquences généré par le dispositif optoélectronique représenté sur la figure 2A ;

les figures 4A et 4B sont des vues de dessus, schématiques et partielles, de l'anneau résonant et du guide filtrant, illustrant le filtrage du mode d'ordre supérieur supporté par l'anneau résonant par le guide filtrant (fig.4A) et l'absence de filtrage du mode fondamental supporté par l'anneau résonant (fig. 4B) ;

les figures 5A-5C illustrent un exemple d'influence de la distance d séparant le guide filtrant de l'anneau résonant sur la valeur du paramètre de dispersion D (fig.5A) ; sur le couplage optique pour le mode d'ordre supérieur supporté par l'anneau résonant et filtré par le guide filtrant (fig.5B) ; sur les pertes optiques du mode fondamental supporté par l'anneau résonant (fig.5C) ; et

la figure 5D illustre l'évolution du couplage optique pour le mode d'ordre supérieur supporté par l'anneau résonant et filtré par le guide filtrant en fonction de la longueur d'onde pour une distance d fixée.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un dispositif optoélectronique de génération d'un peigne de fréquences cohérent. Il comporte un micro-résonateur optique qui forme un oscillateur paramétrique optique, dans lequel un peigne de fréquences cohérent est généré par un phénomène non linéaire d'ordre trois de mélange à quatre ondes en cascade, associé à la formation de solitons temporels dissipatifs de type Kerr. Le peigne de fréquences est dit cohérent lorsque tout ou partie des raies de fréquence sont en relation de phase les unes avec les autres. La cohérence du peigne de fréquences est liée ici à la présence de solitons temporels dissipatifs de type Kerr.

Un oscillateur paramétrique optique est une source de lumière cohérente qui repose sur une amplification paramétrique dans un résonateur optique. Le résonateur optique comporte ici une cavité optique réalisée en un milieu non linéaire du troisième ordre, c'est-à-dire comportant une susceptibilité électrique $\chi^{(3)}$ d'ordre trois, permettant au mélange à quatre ondes cascadé d'avoir lieu, générant ainsi un peigne de fréquences.

Le mélange à quatre ondes cascadé est un phénomène non linéaire du troisième ordre dans lequel deux photons de fréquence de pompe $w_p$ sont convertis sans perte d'énergie en un photon signal de fréquence $w_s$ et d'un photon complémentaire (*idler*, en anglais) de fréquence $w_c$. Il est dit cascadé dans la mesure où les photons générés sont également à l'origine de la génération d'autres photons signal et complémentaire par mélange à quatre ondes.

L'effet Kerr optique est un phénomène non linéaire d'ordre trois qui exprime la dépendance de l'indice de réfraction d'un milieu vis-à-vis de l'intensité du signal optique qui le parcourt. Cette dépendance peut être formalisée par la relation : $n = n_0 + n_2.I$ où $n$ est l'indice de réfraction du matériau, $n_0 = (I+\chi^{(1)})^{1/2}$, où $\chi^{(1)}$ est la permittivité électrique d'ordre 1, $n_2$ est l'indice non linéaire qui dépend de la permittivité électrique $\chi^{(3)}$ d'ordre 3, et où $I$ est l'intensité du signal optique qui traverse le milieu.

Comme détaillé plus loin, pour permettre la formation des solitons temporels dissipatifs de Kerr, la cavité optique du micro-résonateur est en outre adaptée pour présenter un régime de dispersion anormale associé au mode optique fondamental qu'elle supporte. La dispersion est dite anormale lorsque le paramètre de dispersion D est positif. Ce paramètre D, exprimé en ps/(nm.km), est défini comme le produit d'une grandeur $\beta_2$ et de $-2\pi c/\lambda^2$ où $\lambda$ est la longueur d'onde du mode fondamental supporté par l'anneau résonant, égal ici à la longueur d'onde de pompe $\lambda_p$. La grandeur $\beta_2$, également appelée dispersion de la vitesse de groupe (GVD, pour *Group Velocity Dispersion,* en anglais), correspond au fait que la vitesse de groupe du signal optique est dépendante de la longueur d'onde du signal. La grandeur $\beta_2$ est définie comme étant égale à la dérivée de l'inverse de la vitesse de groupe du signal optique :

$$\beta_2 = \frac{\partial}{\partial w}\frac{1}{v_g} = \frac{\partial^2 k}{\partial w^2}$$ où $v_g$ est la vitesse de groupe du signal optique considéré, $w$ la fréquence et $k$ le nombre d'onde. Autrement dit, elle correspond à la dérivée seconde de $\beta(w)$ par rapport à $w$, à la longueur d'onde de pompe $\lambda_p$. $\beta$ est la constante de propagation, qui dépend du champ optique du mode et des caractéristiques dimensionnelles du guide d'onde.

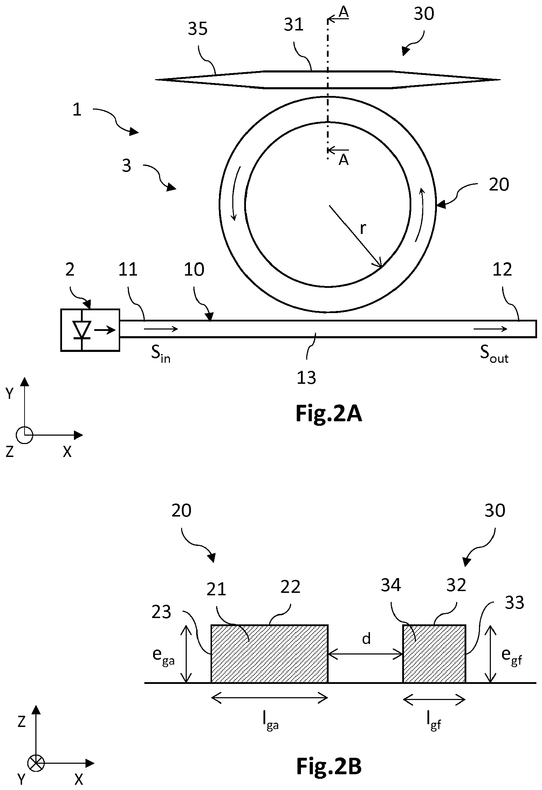

La figure 2A est une vue de dessus, schématique et partielle, d'un dispositif optoélectronique 1 de génération de peigne de fréquences cohérent selon un mode de réalisation. Ce dispositif optoélectronique 1 comporte une source laser 2 adaptée à émettre un signal optique monochromatique continu, un micro-résonateur optique 3 en anneau, et au moins un guide d'onde filtrant 30. La figure 2B est une vue en coupe de l'anneau résonant 20 et du guide filtrant 30 suivant un plan AA illustré sur la figure 2A.

Dans la suite de la description, on définit un repère orthogonal tridimensionnel (X,Y,Z) où les axes X et Y forment un plan parallèle au plan sur lequel reposent les guides d'onde du dispositif optoélectronique, et où l'axe Z est orienté suivant la dimension d'épaisseur des guides d'onde.

La source laser 2 est adaptée à émettre un signal optique $S_{in}$ dit de pompe. Ce signal optique est continu et monochromatique, de longueur d'onde $\lambda_p$. La longueur d'onde de pompe $\lambda_p$ est choisie pour être en mesure d'exciter un mode fondamental supporté par un guide d'onde en anneau 20 du micro-résonateur optique 3. A titre d'exemple, elle peut être égale à 1,55 $\mu$m dans le cas d'une application dite télécom, voire égale à 1,31 $\mu$m pour une application dite datacom, voire également être une longueur d'onde du visible ou de l'infrarouge, en particulier du moyen infrarouge. La puissance du signal de pompe est choisie de manière à être supérieure aux pertes optiques présentes dans le micro-résonateur optique, de sorte que le gain paramétrique est supérieur aux pertes optiques et que l'amplification du signal optique dans le micro-résonateur 3 en anneau puisse générer un peigne de fréquences par mélange à quatre ondes en cascade.

Le micro-résonateur optique 3 en anneau comporte un premier guide d'onde 10 et un deuxième guide d'onde 20 en anneau, dit anneau résonant.

Le premier guide d'onde 10 comporte une entrée 11 et une sortie 12, qui forment également l'entrée et la sortie du micro-résonateur optique 3. L'entrée 11 est couplée optiquement à la source laser 2 pour recevoir le signal de pompe Sin émis par celle-ci, et la sortie 12 est adaptée à fournir le peigne de fréquence généré. Il comporte une zone de couplage 13 destinée à être couplée optiquement, par onde évanescente, à l'anneau résonant 20.

Le premier guide d'onde 10 est réalisé en un matériau, dit de coeur, à haut indice de réfraction. Plus précisément il comporte un coeur formé du matériau de haut indice de réfraction entouré d'une gaine formé d'au moins un matériau de bas indice de réfraction. Le coeur repose sur une surface d'un substrat (non représenté) dont le matériau participe à former la gaine. A titre d'exemple, le matériau de coeur peut être du nitrure de silicium SiN, par exemple du $Si_3N_4$, et le matériau de gaine peut être de l'oxyde de silicium SiO, par exemple

du SiO$_2$.

Le guide d'onde 10 s'étend longitudinalement entre l'entrée 11 et la sortie 12, avec une forme qui peut être quelconque. D'une manière générale, chaque guide d'onde présente une face supérieure opposée à la surface du substrat, et des flancs latéraux qui s'étendent à partir de la face supérieure jusqu'à la surface du substrat. Il présente des dimensions transversales de hauteur et de largeur. Par hauteur, on entend la distance moyenne du guide d'onde, et plus précisément du coeur, suivant l'axe Z orthogonal au plan du substrat, entre la face supérieure et la surface du substrat. Par largeur, on entend la distance moyenne entre les flancs latéraux du guide d'onde, et plus précisément du coeur, dans un plan parallèle au plan du substrat. La hauteur et la largeur sont sensiblement constantes suivant l'étendue longitudinale du guide d'onde. A titre d'exemple, pour une longueur de pompe de 1,55μm, les dimensions transversales du coeur peuvent aller de quelques centaines de nanomètres jusqu'à plusieurs micromètres. Le premier guide d'onde peut être monomode ou multimode. Dans cet exemple, il est de préférence monomode et supporte un mode de type TE (transverse électrique).

Le deuxième guide d'onde 20, dit anneau résonant, forme la cavité optique du micro-résonateur 3. Comme pour tout oscillateur paramétrique optique de type Kerr, il comporte un matériau non linéaire d'ordre trois permettant de générer des ondes optiques de longueur d'onde différentes de la longueur d'onde de pompe par un phénomène de mélange à quatre ondes en cascade. De plus, l'anneau résonant 20 présente un régime de dispersion anormale pour le mode optique fondamental, permettant ainsi la formation de solitons temporels dissipatifs de type Kerr contribuant, avec le mélange à quatre ondes en cascade, à la génération du peigne de fréquences cohérent.

L'anneau résonant 20 est un guide d'onde en forme d'anneau. Il comporte une zone de couplage optique permettant d'être couplé par onde évanescente au premier guide d'onde. Il peut s'étendre sous la forme d'un cercle, d'un ovale ou autre. Dans cet exemple, il présente une forme de cercle dont le rayon r est défini à partir d'une ligne longitudinale s'étendant le long du barycentre transversal du coeur de l'anneau résonant 20.

L'anneau résonant 20 est réalisé en un matériau de haut indice à propriétés optiques non linéaires d'ordre trois. Plus précisément, il comporte un coeur 21 réalisé en le matériau de haut indice de réfraction et une gaine réalisée en un matériau de bas indice de réfraction. Le coeur 21 présente une face supérieure 22 opposée à la surface du substrat sur laquelle il repose, et des flancs latéraux 23 qui s'étendent à partir de la face supérieure 22 jusqu'au substrat. Il présente une épaisseur e$_{ga}$ et une largeur l$_{ga}$ sensiblement constantes suivant son étendue longitudinale.

L'anneau résonant 20 est adapté à être couplé optiquement au premier guide d'onde 10. Ainsi, il est dimensionné pour qu'il y ait accord de phase entre le mode optique fondamental, ici TEoo, supporté par le premier guide 10 et le mode optique fondamental, ici TEoo, supporté par l'anneau résonant 20. Autrement dit, la constante de propagation du mode fondamental TEoo supporté par l'anneau résonant 20 est égale à la constante de propagation du mode fondamental TEoo supporté par le premier guide 10, ce qui se traduit ici par l'égalité entre l'indice effectif du mode fondamental TEoo supporté par l'anneau résonant 20 avec celui du mode fondamental TE$_{00}$ supporté par le premier guide 10.

D'une manière générale, l'indice effectif n$_{eff}$ d'un mode d'un guide d'onde est défini comme le produit de la constante de propagation β et de λ/2π. La constante de propagation β dépend de la longueur d'onde λ et du mode du signal optique, ainsi que des propriétés du guide d'onde (indices de réfraction et géométrie). L'indice effectif du mode correspond, d'une certaine manière, à l'indice de réfraction du guide 'vu' par le mode optique. Il est habituellement compris entre l'indice du coeur et l'indice de la gaine du guide d'onde.

L'anneau résonant 20 est de plus adapté à assurer une conversion paramétrique de fréquences par mélange à quatre ondes en cascade. Pour cela, le matériau de haut indice du coeur présente des propriétés optiques non-linéaires autorisant l'effet Kerr optique, et ainsi présente un indice de réfraction qui dépend de l'intensité du signal optique le parcourant. Le mélange à quatre ondes par effet Kerr optique est alors possible. De préférence, le matériau de l'anneau résonant, et plus précisément celui du coeur 21, est du nitrure de silicium SiN, par exemple du Si$_3$N$_4$. Le matériau de gaine peut être un oxyde de silicium SiO, par exemple du SiO$_2$.

L'anneau résonant 20 est de plus adapté à former des solitons temporels dissipatifs dits de Kerr. Par définition, un soliton est une onde optique solitaire qui se propage sans se déformer dans un milieu non-linéaire et dissipatif. Ces solitons sont dit de type Kerr dans la mesure où ils sont générés dans un matériau non-linéaire du troisième ordre par effet Kerr optique.

Dans le mesure où le régime solitonique ne peut apparaître que dans une cavité optique où la dispersion est anormale, l'anneau résonant 20 est adapté de sorte que la dispersion soit anormale pour le mode fondamental, ici Teoo, supporté par l'anneau résonant 20. Pour cela, comme le montre la publication d'Okawachi et al intitulée Octave-spanning frequency comb generation in a silicon nitride chip, Opt. Lett. 36, 3398 (2011), les dimensions transversales de hauteur et/ ou de largeur de l'anneau résonant 20, et plus précisément du coeur 21 de l'anneau résonant 20, sont adaptées pour qu'il présente un régime de dispersion anormale associé au mode fondamental, ici Teoo. Dans le cas où le matériau de coeur est un nitrure de silicium, cela se traduit alors par le fait que les dimensions d'épaisseur et/ou de largeur de l'anneau résonant 20 deviennent supérieures à la longueur d'onde λ$_p$ du signal de pompe, l'anneau résonant 20 pouvant alors supporter plusieurs modes optiques différents (guide multimode). L'anneau résonant 20 peut ainsi supporter le mode fondamental $TE_{00}$ et au moins un mode d'ordre supérieur, par exemple le mode $TE_{01}$. A titre d'exemple, dans le cas d'une longueur d'onde de pompe $\lambda_p$ égale à $1,55\mu m$ environ, et pour un matériau du coeur de l'anneau résonant 20 en nitrure de silicium, la hauteur $e_{ga}$ est de préférence supérieure ou égale à 700nm et la largeur $l_{ga}$ est de préférence supérieure ou égale à 1200nm.

Le guide filtrant 30 est couplé optiquement à l'anneau résonant 20 de manière à filtrer un mode d'ordre supérieur, ici par exemple le mode TEoi, supporté par l'anneau résonant 20. Il permet ainsi de limiter les interactions entre les différents modes optiques au sein de l'anneau résonant 20, ces interactions étant susceptibles de dégrader le régime anormal de la dispersion D et donc de perturber la formation des solitons temporels dissipatifs.

Pour cela, le guide filtrant 30 comporte une portion de couplage 31 couplée optiquement à l'anneau résonant 20. Les dimensions et l'indice de réfraction du guide filtrant 30, plus précisément du coeur 34 du guide filtrant 30, sont choisis pour qu'il y ait accord de phase entre le mode optique d'ordre supérieur à filtrer, ici TEoi, supporté par l'anneau résonant 20, et le mode optique fondamental TEoo supporté par le guide filtrant 30. Autrement dit, la constante de propagation du mode d'ordre supérieur à filtrer TEoi supporté par l'anneau résonant 20 est égale à la constante de propagation du mode fondamental TEoo supporté par le guide filtrant 30, ce qui se traduit ici par l'égalité entre l'indice effectif du mode d'ordre supérieur TEoi de l'anneau résonant 20 avec celui du mode fondamental TEoo du guide filtrant 30. Ainsi, le guide filtrant 30 est en mesure de filtrer le mode d'ordre supérieur de l'anneau résonant 20. De plus, dans la mesure où il y a accord de phase entre ces deux modes optiques, il n'y a pas d'accord de phase entre le guide filtrant 30 et le mode fondamental TEoo de l'anneau résonant 20, de sorte que la présence du guide filtrant 30 n'induit sensiblement pas de perturbations au mode fondamental de l'anneau résonant 20.

Le guide filtrant 30 est formé d'un coeur 34 réalisé en au moins un matériau de haut indice entouré d'une gaine réalisé en au moins un matériau de bas indice. Le matériau de haut indice est de préférence identique à celui de l'anneau résonant 20, par exemple du nitrure de silicium SiN, par exemple du $Si_3N_4$. Le matériau de gaine peut être un oxyde de silicium SiO, par exemple du $SiO_2$. Le guide filtrant 30 présente une épaisseur $e_{gf}$ et une largeur $l_{gf}$ constantes au niveau de la portion de couplage 31. Le guide filtrant 30 est espacé de l'anneau résonant 20 d'une distance d, correspondant à la distance minimale séparant la portion de couplage du guide filtrant 30 de l'anneau résonant 20. La distance d est mesurée à partir des flancs latéraux en vis-à-vis de l'anneau résonant 20 et du guide filtrant 30. La distance d peut être de l'ordre de quelques centaines de nanomètres voire quelques microns. Elle peut ainsi être comprise entre 100nm et 800nm, de préférence comprise entre 100nm et 400nm, et de préférence comprise entre 200nm et 300nm, par exemple égale à 250nm environ.

Le guide d'onde 30 comprend une portion dite d'extrémité 35 située dans le prolongement de la portion de couplage 31 dans le sens de la propagation du mode optique fondamental, qui présente une diminution progressive de ses dimensions transversales, et ici de sa largeur, à mesure que l'on s'éloigne de la portion de couplage 31. On réalise ainsi une diminution progressive de l'indice effectif du mode guidé, se traduisant par une fuite optique du mode par rayonnement diffractif dans le substrat.

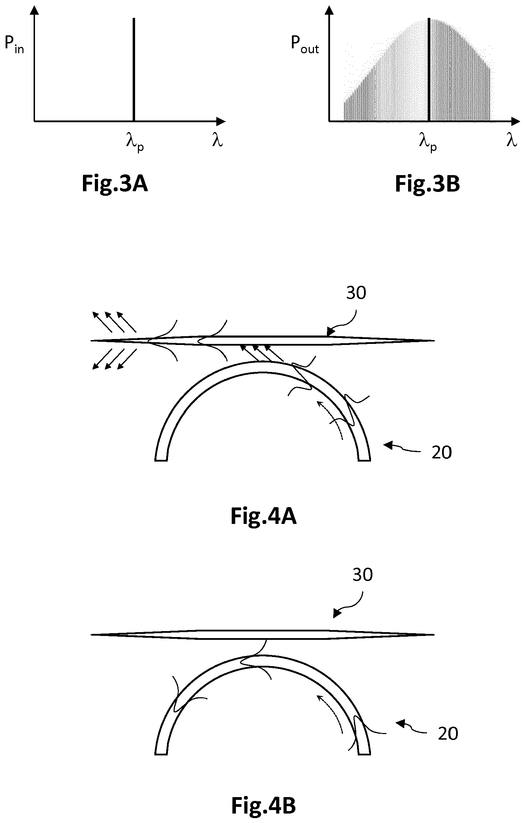

Le fonctionnement du dispositif optoélectronique selon le mode de réalisation est maintenant décrit, en référence aux figures 3A-3B et 4A-4B.

La source laser 2 émet un signal optique Sin de pompe continu et monochromatique de longueur d'onde $\lambda_p$, dont un spectre est illustré sur la figure 3A. Ce signal de pompe Sin est transmis par le premier guide d'onde 10 en direction de la sortie 12 du guide. Dans la mesure où le premier guide d'onde 10 est monomode dans cet exemple, le signal de pompe correspond à un mode fondamental du guide 10, par exemple $TE_{00}$.

Par couplage optique de type évanescent entre le premier guide d'onde 10 et l'anneau résonant 20, le signal de pompe Sin de mode TEoo excite le mode fondamental TEoo de l'anneau résonant 20. Plus précisément, le couplage optique est réalisé par l'accord de phase entre le mode fondamental TEoo du premier guide 10 et le mode fondamental TEoo de l'anneau résonant 20. Ainsi, une partie ou la totalité du signal optique Sin est transmise du premier guide 10 dans l'anneau résonant 20.

Dans la mesure où l'anneau résonant 20 est réalisé en un matériau non linéaire du troisième ordre autorisant l'effet Kerr optique d'une part, et qu'il présente un régime de dispersion anormale d'autre part, des solitons temporels dissipatifs de Kerr sont formés qui génèrent un peigne de fréquences cohérent par mélange à quatre ondes en cascade.

La génération du peigne de fréquences cohérent est rendue plus robuste dans la mesure la formation des solitons dissipatifs n'est pas perturbée par d'éventuels couplages ou interférences entre le mode fondamental TEoo et au moins un mode optique d'ordre supérieur, ici le mode $TE_{01}$.

En effet, comme l'illustre la figure 4A, le mode optique d'ordre supérieur TEoi supporté par l'anneau résonant 20 est filtré et donc sensiblement supprimé de l'anneau résonant 20 par le couplage optique entre l'anneau résonant 20 et le guide filtrant 30. Ce filtrage optique est obtenu par l'accord de phase entre le mode d'ordre supérieur, ici $TE_{01}$, de l'anneau résonant 20 et le mode fondamental $TE_{00}$ du guide filtrant 30. Ainsi, la puissance optique du mode $TE_{01}$ présent dans l'anneau résonant 20 est transmise au mode fondamental $TE_{00}$ du guide filtrant 30.

De plus, comme l'illustre la figure 4B, le filtrage du mode d'ordre supérieur TEoi n'impacte pas le mode fondamental TEoo (ni sa dispersion) de l'anneau résonant 20, dans la mesure où il n'y a pas d'accord de phase entre le mode fondamental $TE_{00}$ de l'anneau résonant 20 et celui du guide filtrant 30.

Ainsi, en sortie du premier guide d'onde, un peigne de fréquences cohérent est obtenu. Il présente un intervalle spectral libre constant, c'est-à-dire une valeur constante d'espacement entre les raies de fréquence successives, ainsi qu'un bruit faible de fréquence et/ou d'amplitude. De plus, l'amplitude des raies de fréquences est pondérée par une enveloppe spectrale de type sinus hyperbolique au carré (sinh$^2$) centrée sur la longueur d'onde $\lambda_p$ de pompe, traduisant ainsi la cohérence du peigne de fréquences.

Le dispositif optoélectronique 1 présente ainsi des pertes optiques diminuées par rapport à l'exemple de l'art antérieur mentionné précédemment, dans la mesure où l'anneau résonant 20 ne comporte pas de portion filtrante. Le micro-résonateur optique 3 présente alors un seuil d'oscillation diminué, au sens d'un oscillateur paramétrique optique, permettant d'obtenir un peigne de fréquences de même intensité pour une puissance du signal de pompe diminuée, ou un peigne de fréquences de plus grande intensité pour une puissance du signal de pompe identique.

De plus, le dispositif optoélectronique est rendu plus robuste dans la mesure où le régime de dispersion reste de type anormal sur toute la longueur de l'anneau résonant 20, limitant ainsi les perturbations susceptibles de dégrader la formation des solitons temporels dissipatifs de type Kerr.

A titre purement illustratif, le dispositif optoélectronique 1 peut comporter une source laser 2 adaptée à émettre un signal optique de pompe monochromatique continu, de longueur d'onde égale à 1,55$\mu$m. Le signal de pompe est guidé dans le premier guide d'onde 10, celui-ci étant monomode et supportant le mode fondamental TEoo.

L'anneau résonant 20 est réalisé en $Si_3N_4$ qui est un matériau à effet Kerr optique. Il présente un rayon r de 115$\mu$m environ, une épaisseur $e_{ga}$ de 710nm environ et une largeur $l_{ga}$ de 1,6$\mu$m environ. L'anneau résonant 20 est donc multimode à 1,55$\mu$m et supporte le mode fondamental $TE_{00}$ ainsi qu'au moins un mode d'ordre supérieur, par exemple le mode $TE_{01}$. Indépendamment du guide filtrant 30, l'anneau résonant 20 présente un paramètre de dispersion chromatique D associé au mode fondamental $TE_{00}$ à 1,55$\mu$m égal à 82,2 ps/ (nm.km). Cette valeur de dispersion chromatique étant positive, l'anneau résonant 20 est bien en régime de dispersion anormale pour ce signal optique.

Par ailleurs, le guide filtrant 30 est également réalisé en $Si_3N_4$. Il présente une portion de couplage d'une épaisseur $e_{gf}$ de 710nm environ, sensiblement égale à celle de l'anneau résonant 20, et d'une largeur $l_{gf}$ de 660nm environ. Outre l'indice de réfraction du guide filtrant 30, les dimensions transversales de sa portion de couplage 31 sont choisies de sorte qu'il y ait accord de phase entre le mode d'ordre supérieur TEoi supporté par l'anneau résonant 20 et le mode fondamental TEoo supporté par le guide filtrant 30. En d'autres termes, l'indice effectif du mode d'ordre supérieur TEoi supporté par l'anneau résonant 20 est sensiblement égal à l'indice effectif du mode fondamental $TE_{00}$ supporté par le guide filtrant 30 : $(n_{eff,TE01})_{ga} = (n_{eff,TE00})_{gf}$.

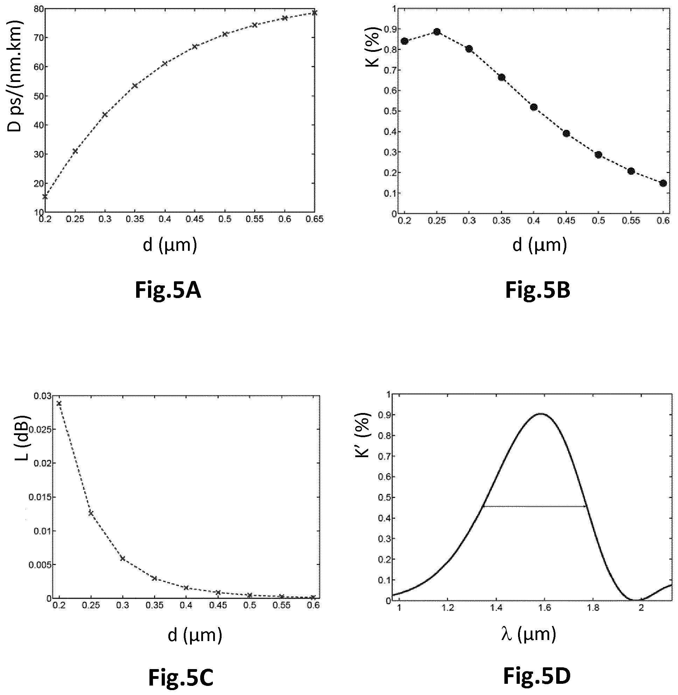

Comme l'illustre la figure 5A, il apparaît que la valeur du paramètre de dispersion D associé au mode fondamental TEoo supporté par l'anneau résonant 20 à la longueur d'onde de pompe 1,55$\mu$m est modifié par la présence du guide filtrant 30, et qu'il est notamment fonction de la distance d séparant le guide filtrant 30 de l'anneau résonant 20. Ainsi, la valeur du paramètre D diminue à mesure que l'on rapproche le guide filtrant 30 de l'anneau résonant 20. Elle est ainsi de 78 ps/ (nm.km) à une distance d de 650nm et diminue continûment à une valeur de 15 ps/ (nm.km) à une distance d de 200nm. Ainsi, quelle que soit la valeur de la distance d entre le guide filtrant 30 et l'anneau résonant 20, la valeur du paramètre de dispersion D reste positive, traduisant ainsi la présence d'un régime de dispersion anormale pour le mode fondamental $TE_{00}$ supporté par l'anneau résonant 20 à la longueur d'onde de pompe 1,55$\mu$m.

Comme l'illustre la figure 5B, le taux de couplage K par onde évanescente entre le mode d'ordre supérieur TEoi supporté par l'anneau résonant 20 et le mode TEoo supporté par le guide filtrant 30 dépend de la distance d séparant le guide filtrant 30 de l'anneau résonant 20. Alors que le taux de couplage K diminue à mesure que la distance d augmente, il apparaît qu'il présente un optimum à 250nm environ, où le taux de couplage est égal à 90% environ. Ainsi, la distance d est de préférence inférieure ou égale à 400nm environ pour assurer un taux de couplage supérieur ou égal à 50%, et de préférence est inférieure ou égale à 350nm, et de préférence comprise entre 200nm et 300nm pour assurer un taux de couplage supérieur ou égal à 80%, et de préférence encore égale à 250nm environ.

Comme l'illustre la figure 5C, les pertes optiques L du mode fondamental TEoo supporté par l'anneau résonant 20, du fait de la présence du guide filtrant 30, restent très faibles, traduisant ainsi le faible impact du guide filtrant 30 sur ce mode optique. Le guide filtrant 30 permet alors de correctement filtrer le mode d'ordre supérieur TEoi présent dans l'anneau résonant 20 sans perturber le mode fondamental TEoo. Les pertes optiques diminuent à mesure que la distance d augmente, mais elles restent très faibles. Elles sont ainsi inférieures à 0,03 dB pour une distance d supérieure à 200nm et chutent à 0,01 dB environ pour une distance d de 250nm. Elles sont donc négligeables, voire quasi nulles.

La figure 5D illustre le taux de couplage K' entre le mode d'ordre supérieur TEoi supporté par l'anneau résonant 20 et le mode TEoo supporté par le guide filtrant 30 en fonction de la longueur d'onde, pour une distance d égale à 250nm environ. Autrement dit, cette figure illustre le comportement spectral du guide filtrant 30 entre l'anneau résonant 20 et le guide filtrant 30 à une distance d de 250nm environ. Le taux de couplage K'présente une valeur maximale de 90 % pour une longueur d'onde de 1,585μm environ. La largeur de bande du filtre, à 3 dB, est égale à 430nm environ. Un tel guide filtrant 30 permet ainsi de limiter les contraintes d'accord de phase entre les modes optiques de l'anneau résonant 20 et du guide filtrant 30.

Des modes de réalisation particuliers viennent d'être décrits. Différentes variantes et modifications apparaîtront à l'homme du métier. Ainsi, le mode d'ordre supérieur à filtrer mentionné précédemment est le mode $TE_{01}$ mais il pourrait s'agir du mode TEio voire un autre type de mode. Si plusieurs modes d'ordre supérieur sont présents dans l'anneau résonant 20, plusieurs guides filtrants peuvent être prévus, qui sont adaptés chacun à filtrer un mode d'ordre supérieur donné. Par ailleurs, les exemples de modes optiques mentionnés précédemment sont des modes TE (transverse électrique), mais il pourrait s'agir de modes TM (transverse magnétique).

## Revendications

1. Dispositif optoélectronique (1) de génération d'un peigne de fréquences, comportant :

  ∘ une source laser (2) adaptée à émettre un signal optique dit de pompe, continu et monochromatique d'une longueur d'onde dite de pompe ;
  ∘ un micro-résonateur optique (3) en anneau, comportant :

    ▪ un premier guide d'onde (10), comportant une entrée (11) couplée optiquement à la source laser (2), et une sortie (12) destinée à fournir le peigne de fréquences généré ;
    ▪ un deuxième guide d'onde (20) multimode en anneau, dit anneau résonant, couplé optiquement au premier guide d'onde (10) pour générer un mode optique dit fondamental dans l'anneau résonant (20), l'anneau résonant (20) étant formé en un matériau, dit de coeur, optiquement non linéaire d'ordre trois dont l'indice de réfraction dépend de l'intensité d'un signal optique le parcourant et qui présente des dimensions transversales telles qu'il présente un régime de dispersion anormale associé audit mode optique fondamental ;

  **caractérisé en ce qu'**il comporte :
  ∘ au moins un troisième guide d'onde (30), dit guide filtrant, couplé optiquement à l'anneau résonant (20), présentant un indice effectif associé à un mode optique fondamental supporté par le guide filtrant (30) égal à un indice effectif associé à un mode optique d'ordre supérieur supporté par l'anneau résonant (20).

2. Dispositif (1) selon la revendication 1, dans lequel le guide filtrant (30) comporte une portion de couplage (31) couplée optiquement à l'anneau résonant (20), et formée d'un matériau dit de coeur, l'indice de réfraction du matériau de coeur et des dimensions transversales étant choisis de sorte qu'un indice effectif associé du mode optique fondamental du guide filtrant (30) soit égal à un indice effectif associé au mode optique d'ordre supérieur de l'anneau résonant (20).

3. Dispositif (1) selon la revendication 1 ou 2, dans lequel le guide filtrant (30) présente une portion de couplage (31) monomode.

4. Dispositif (1) selon l'une quelconque des revendications 1 à 3, dans lequel le guide filtrant (30) est réalisé en un matériau, dit de coeur, identique à celui de l'anneau résonant (20).

5. Dispositif (1) selon l'une quelconque des revendications 1 à 4, dans lequel le guide filtrant (30) comporte une portion de couplage (31) espacée de l'anneau résonant (20) d'une distance (d) comprise entre 200nm et 300nm.

6. Dispositif (1) selon l'une quelconque des revendications 1 à 5, dans lequel le guide filtrant (30) comporte une portion de couplage (31) et une portion d'extrémité (35), la portion d'extrémité (35) présentant des dimensions transversales qui diminuent à mesure que l'on s'éloigne de la portion de couplage (31).

7. Dispositif (1) selon l'une quelconque des revendications 1 à 6, dans lequel l'anneau résonant (20) est formé d'un coeur (21) entouré d'une gaine, le matériau de coeur étant du nitrure de silicium.

8. Dispositif (1) selon l'une quelconque des revendications 1 à 7, dans lequel l'anneau résonant (20) présente une épaisseur moyenne supérieure ou égale à 700nm, et une largeur moyenne supérieure ou égale à 1200nm.

## Patentansprüche

1. Optoelektronische Vorrichtung (1) zur Erzeugung eines Frequenzkamms, welche aufweist:

  ∘ eine Laserquelle (2), die dafür ausgelegt ist, ein kontinuierliches und monochromatisches optisches Signal, "Pumpsignal" genannt, mit einer "Pumpwellenlänge" genannten Wellenlänge zu senden;

◦ einen ringförmigen optischen Mikroresonator (3), welcher aufweist:

■ einen ersten Wellenleiter (10), der einen Eingang (11), der mit der Laserquelle (2) optisch gekoppelt ist, und einen Ausgang (12), der dazu bestimmt ist, den erzeugten Frequenzkamm zu liefern, aufweist;

■ einen zweiten, ringförmigen Multimode-Wellenleiter (20), "Ringresonator" genannt, der mit dem ersten Wellenleiter (10) optisch gekoppelt ist, um eine optische Mode, "Fundamentalmode" genannt, in dem Ringresonator (20) zu erzeugen, wobei der Ringresonator (20) aus einem optisch in dritter Ordnung nichtlinearen Material, "Kernmaterial" genannt, ausgebildet ist, dessen Brechungsindex von der Stärke eines es durchlaufenden optischen Signals abhängt, und solche Querabmessungen aufweist, dass er ein anomales Dispersionsregime aufweist, das der optischen Fundamentalmode zugeordnet ist;

dadurch gekennzeichnet, dass sie aufweist:

◦ wenigstens einen dritten Wellenleiter (30), "filternder Leiter" genannt, der mit dem Ringresonator (20) optisch gekoppelt ist und einen effektiven Index aufweist, der einer von dem filternden Leiter (30) unterstützten optischen Fundamentalmode zugeordnet ist und gleich einem effektiven Index ist, der einer von dem Ringresonator (20) unterstützten optischen Mode höherer Ordnung zugeordnet ist.

2. Vorrichtung (1) nach Anspruch 1, wobei der filternde Leiter (30) einen Kopplungsabschnitt (31) aufweist, der mit dem Ringresonator (20) optisch gekoppelt ist und aus einem "Kernmaterial" genannten Material ausgebildet ist, wobei der Brechungsindex des Kernmaterials und Querabmessungen so gewählt sind, dass ein effektiver Index, der einer optischen Fundamentalmode des filternden Leiters (30) zugeordnet ist, gleich einem effektiven Index ist, der einer optischen Mode höherer Ordnung des Ringresonators (20) zugeordnet ist.

3. Vorrichtung (1) nach Anspruch 1 oder 2, wobei der filternde Leiter (30) einen einmodigen Kopplungsabschnitt (31) aufweist.

4. Vorrichtung (1) nach einem der Ansprüche 1 bis 3, wobei der filternde Leiter (30) aus einem "Kernmaterial" genannten Material hergestellt ist, das mit demjenigen des Ringresonators (20) identisch ist.

5. Vorrichtung (1) nach einem der Ansprüche 1 bis 4, wobei der filternde Leiter (30) einen Kopplungsabschnitt (31) aufweist, der von dem Ringresonator (20) mit einem Abstand (d) zwischen 200 nm und 300 nm beabstandet ist.

6. Vorrichtung (1) nach einem der Ansprüche 1 bis 5, wobei der filternde Leiter (30) einen Kopplungsabschnitt (31) und einen Endabschnitt (35) aufweist, wobei der Endabschnitt (35) Querabmessungen aufweist, welche sich mit zunehmender Entfernung vom Kopplungsabschnitt (31) verringern.

7. Vorrichtung (1) nach einem der Ansprüche 1 bis 6, wobei der Ringresonator (20) von einem Kern (21) gebildet wird, der von einer Hülle umgeben ist, wobei das Kernmaterial Siliziumnitrid ist.

8. Vorrichtung (1) nach einem der Ansprüche 1 bis 7, wobei der Ringresonator (20) eine mittlere Dicke, die größer oder gleich 700 nm ist, und eine mittlere Breite, die größer oder gleich 1200 nm ist, aufweist.

## Claims

1. Optoelectronic device (1) for generation of a frequency comb, comprising:

◦ a laser source (2) designed to emit an optical signal, referred to as pump signal, that is continuous and monochromatic with a wavelength referred to as pump wavelength;
◦ an optical ring micro-resonator (3), comprising:

■ a first waveguide (10), comprising an input (11) optically coupled to the laser source (2), and an output (12) intended to supply the frequency comb generated;
■ a second ring multimode waveguide (20), referred to as resonant ring, optically coupled to the first waveguide (10) for generating an optical mode called fundamental mode in the resonant ring (20), the resonant ring (20) being formed from a material, referred to as core material, optically non-linear of order three whose index of refraction depends on the intensity of an optical signal passing through it and which has transverse dimensions such that it exhibits an abnormal dispersion regime associated with the said fundamental optical mode;

characterized in that it comprises:
◦ at least a third waveguide (30), referred to as filtering guide, optically coupled to the resonant ring (20), having an effective index associated with a fundamental optical mode supported by the filtering guide (30) equal to an effective index associated with an optical higher order mode supported by the resonant ring (20).

2. Device (1) according to Claim 1, in which the filtering guide (30) comprises a coupling portion (31) optically coupled to the resonant ring (20) and formed from a material referred to as core material, the index of refraction of the core material and transverse dimensions being chosen such that an effective index associated with the fundamental optical mode of the filtering guide (30) is equal to an effective index associated with the optical higher order mode of the resonant ring (20).

3. Device (1) according to Claim 1 or 2, in which the filtering guide (30) has a single-mode coupling portion (31).

4. Device (1) according to any one of Claims 1 to 3, in which the filtering guide (30) is made from a material, referred to as core material, identical to that of the resonant ring (20).

5. Device (1) according to any one of Claims 1 to 4, in which the filtering guide (30) comprises a coupling portion (31) spaced from the resonant ring (20) by a distance (d) in the range between 200 nm and 300 nm.

6. Device (1) according to any one of Claims 1 to 5, in which the filtering guide (30) comprises a coupling portion (31) and an end portion (35), the end portion (35) having transverse dimensions which decrease with distance from the coupling portion (31).

7. Device (1) according to any one of Claims 1 to 6, in which the resonant ring (20) is composed of a core (21) surrounded by a sheath, the core material being silicon nitride.

8. Device (1) according to any one of Claims 1 to 7, in which the resonant ring (20) has an average thickness greater than or equal to 700 nm, and an average width greater than or equal to 1200 nm.

1

3

20

2    10

$S_{in}$    $S_{out}$

**Fig.1A**

$P_{in}$

$\lambda_p$    $\lambda$

$P_{out}$

$\lambda_p$    $\lambda$

**Fig.1B**    **Fig.1C**

**Fig.2A**

**Fig.2B**

**Fig.3A**

**Fig.3B**

**Fig.4A**

**Fig.4B**

**Fig.5A**

**Fig.5B**

**Fig.5C**

**Fig.5D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LEVY et al.** CMOS-compatible multiple-wavelength oscillator for on-chip optical interconnects. *Nature Photon.,* 2010, vol. 4, 37-40
- **KORDTS et al.** Higher order mode suppression in high-Q anomalous dispersion SiN microresonators for temporal dissipative Kerr soliton formation. *Opt. Lett.,* 2016, vol. 41, 452

- **OKAWACHI et al.** Octave-spanning frequency comb generation in a silicon nitride chip. *Opt. Lett.,* 2011, vol. 36, 3398